(19) Europäisches Patentamt
European Patent Office
Office européen des brevets

(11) Numéro de publication: **0 282 423 A1**

# (12) DEMANDE DE BREVET EUROPEEN

(21) Numéro de dépôt: **88420056.9**

(51) Int. Cl.[4]: **C 07 F 9/38**

(22) Date de dépôt: **18.02.88**

(30) Priorité: **19.02.87 FR 8702435**

(43) Date de publication de la demande: **14.09.88 Bulletin 88/37**

(84) Etats contractants désignés: **AT BE CH DE ES FR GB GR IT LI LU NL SE**

(71) Demandeur: **RHONE-POULENC AGROCHIMIE**
**14-20, rue Pierre Baizet**
**F-69009 Lyon (FR)**

(72) Inventeur: **Mulhauser, Michel**
**Résidence Charrière Blanche Immeuble Frène 4**
**F-69130 Ecully (FR)**

**Bottanet, Bernard**
**Route du Plan Luzinay**
**F-38200 Vienne (FR)**

(74) Mandataire: **Ranguis, Patrick Frédéric et al**
**RHONE POULENC AGROCHIMIE Service DPI B.P. 9163**
**F-69263 Lyon Cédex 09 (FR)**

## (54) Composés intermédiaires utiles pour la préparation d'herbicides.

(57) L'invention concerne des composés de formula :

```
    OH          H
    |           | + X⁻
O = H - CH2- N - CH2- CO - N - SO2- R1        (I)
    |           |             |
    OH          R4            R
```

```
    OR2
    |
O = P - CH2 - N - CH2 - CO - N - SO2 - R1   (II)
    |          |               |
    OR3        R4              R
```

dans laquelle $R_4$ est un groupement hydrogénolysable, R et $R_1$ sont des groupements alkyle, $X^-$ est un anion $HSO_4^-$, $Cl^-$, $R_7SO_3^-$

L'invention concerne également un procédé se préparation des composés de formule (I) par hydrolyse des composés de formule (II)

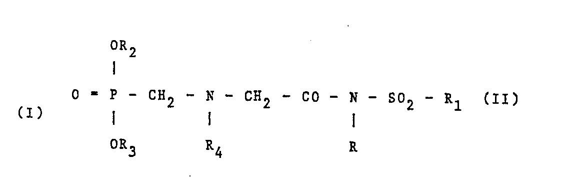

dans laquelle $R_2$ et $R_3$ sont des groupements alkyle liés à l'oxygène par un carbone secondaire au moyen d'acide sulfurique ou chlorhydrique. L'invention concerne également l'utilisation des composés de formule (I) pour la préparation d'herbicide par hydrogénolyse des composés de formule (I)

EP 0 282 423 A1

**Description**

Composés intermédiaires utiles pour la préparation d'herbicides

L'invention concerne de nouveaux composés, leur procédé de préparation et leur utilisation à titre d'intermédiaires pour la préparation de composés de formule:

$$\begin{array}{ccccccccccccccccc} & & OH & & & & H & & & & & & & & & & \\ & & | & & & & | & & & & & & & & & & \\ O & = & P & - & CH_2 & - & N & - & CH_2 & - & CO & - & N & -SO_2 & - & R^1 & \\ & & | & & & & & & & & & & | & & & & \\ & & OH & & & & & & & & & & R & & & & (III) \end{array}$$

dans laquelle :

- $R^1$ représente un radical hydrocarboné, spécialement alkyle, aryle ou cycloalkyle, ces divers radicaux pouvant étentuellement être substitués ; comme substituants, on peut citer en particulier, les atomes d'halogène et les groupes phényle, cyano, alkyle, alkoxyle, carboxylate d'alkyle, dans lesquels les groupes alkyle ont de préférence de l à 4 atomes de carbone ; $R^1$ a le plus souvent de l à l8 atomes de carbone, de préférence de l à 7 atomes de carbone, et plus spécialement de 3 à 7 atomes de carbone lorsqu'il s'agit d'un groupe cycloalkyle ; de préférence il s'agit d'un radical alkyle ayant de l à 4 atomes de carbone, éventuellement halogéné, notamment chloré ou fluoré, par exemple $CF_3$,
- R représente l'atome d'hydrogène ou a l'une des significations donée par $R^1$, et est de préférence un groupe alkyle de l à 4 atomes de carbone,

Un tel procédé a déja été décrit dans EP-A-0l35454.

Un objet de la présente invention est de fournir un procédé amélioré au point de vue de la mise en oeuvre industrielle.

Un autre objet de la présente invention est de fournir un procédé simplifié de mise en oeuvre.

Un autre objet de la présente invention est de fournir un procédé écologiquement avantageux. Les composés de l'invention ont pour formule :

$$\begin{array}{ccccccccccccccccc} & & OH & & & & H & & & & & & & & & & \\ & & | & & & & |\ +\ X^- & & & & & & & & & & \\ O & = & P & - & CH_2 & - & N & - & CH_2 & - & CO & - & N & - & SO_2 & - & R1 \\ & & | & & & & | & & & & & & | & & & & \\ & & OH & & & & R_4 & & & & & & R & & & & \end{array} \qquad (I)$$

dans laquelle R et $R_1$ ont la même signification que dans le composé de formule III décrit ci-dessus, $X^-$ est un anion $HSO_4^-$ , $Cl^-$, $R_7SO_3^-$

- $R^4$ représente un atome d'hydrogène ou un groupement hydrogénolysable ; en particulier un radical de formule $Ar(R^5)(R^6)C$- dans laquelle Ar est un groupe aromatique, de préférence phényle, et $R^5$ et $R^6$ sont l'atome d'hydrogène ou un radical Ar ou un groupe alkyle ayant, de préférence au plus 6 atomes de carbone,
- $R^7$ représente un groupe alkyle de $C_1$ à $C_4$ éventuellement mono ou poly halogéné de préférence trifluorométhyle.

De préférence R et $R_1$ correspondent au groupe méthyle,

De préférence $X^-$ est l'anion $HSO_4^-$ .

L'invention concerne également un procédé de préparation des composés de formule (I) caractérisé en ce qu'on fait réagir un acide choisi parmi $H_2SO_4$, HCl, $HSO_3R_7$, ou un mélange de ceux-ci sur un composé de formule :

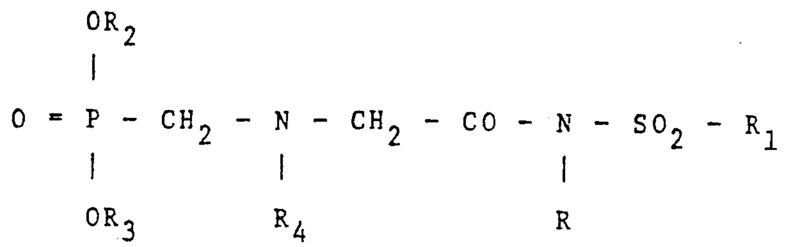
(II)

dans laquelle $R_1$, R, $R_4$ ont la même signification que dans le composé de formule (I) et $R_2$ et $R_3$ identiques ou différents sont des groupes alkyle ou aralkyle éventuellement substitués ayant généralement de 3 à I2 atomes de carbone et de préférence de 3 à 8 atomes de carbone pour les groupes alkyle et 8 à I2 atomes de carbone pour les groupes aralkyle, de préférence 8 atomes de carbone, lesdits groupes étant liés à l'atome d'oxygène par un carbone secondaire, $R_7$ représente un groupe alkyle de $C_1$ à $C_4$ éventuellement mono ou poly halogéné de préférence trifluorométhyle.

La réaction s'effectue par simple chauffage de (II) en présence de l'acide. La température est généralement comprise entre 50° C et I00° C, de préférence entre 60° C et 90° C. Si la réaction est effectuée en présence d'un solvant, on préférera un solvant polaire tel que par exemple : l'eau, les acides carboxyliques aliphatiques de $C_1$ à $C_6$ tels que l'acide acétique, les alcools aliphatiques de $C_1$ à $C_3$ tels que le méthanol.

Parmi ceux-ci, on préférera les acides carboxyliques aliphatiques de $C_1$ à $C_6$ seuls ou en mélange.

L'acide sulfurique est préféré du fait qu'il conduit à d'excellents rendements et que d'autre part il conduit à une séparation aisée du sel résultant et à des sous produits écologiquement acceptables.

De préférence la normalité de l'acide sera comprise entre 2N et pur. Avantageusement, on utilisera cette normalité pour l'acide sulfurique, de préférence entre I0 et 30N.

De préférence, on utilisera au moins deux équivalents d'ions $H^+$ par mole de composé de formule II et, avantageusement entre 2 et I0 équivalents, de préférence entre 2,5 et 4.

Le procédé est plus particulièrement adapté aux composés où R et $R_1$ sont des groups alkyle.

De préférence $R_2$ et $R_3$ identiques ou différents correspondent à des groupes isopropyle ou isobutyle ou isopentyle ou cyclohexyle.

De préférence encore $R_2$, $R_3$ correspondent au groupe isopropyle.

L'invention concerne également l'utilisation des composés de formule (I) pour la synthèse des composés de formule (III) décrite ci-dessus caractérisé par l'hydrogénolyse du composé de formule (I), en présence d'un catalyseur, dans un solvant, susceptible de dissoudre le composé de formule :

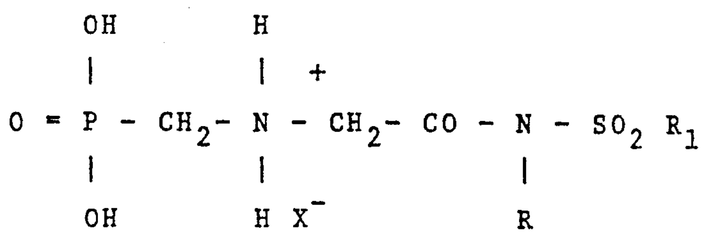
(IV)

dans laquelle R, $R_1$, X ont la même signification que dans le composé de formule (III) puis ajout d'un acepteur d'acide.

Ainsi un autre avantage de l'invention est qu'elle permet une hydrogénolyse du groupe $R_4$ sans séparation intermédiaire. C'est le plus couramment une débenzylation. On opère avantageusement en milieu aqueux ou alcoolique à température ambiante ou supérieure, à pression atmosphérique ou supérieure. Comme catalyseur on peut utiliser les catalyseurs habituels d'hydrogénolyse des radicaux $R^4$ considérés. Comme catalyseurs appropriés on peut citer le palladium, le platine, le nickel Raney. Ce catalyseur peut être utilisé avec ou sans support inerte. On peut aussi utiliser les métaux précités, spécialement le palladium et le platine sous forme de sels, d'hydroxydes, ou d'oxydes, lesquels se transforment en métal correspondant sous l'action de l'hydrogène. Comme catalyseur de débenzylation préfére, on utilise les catalyseurs à base de palladium comme le palladium sur charbon ou le palladium sur sulfate de baryum, ou l'hydroxyde de palladium sur charbon. En fin de réaction, on peut séparer le catalyseur par filtration.

Le solvant est généralement choisi parmi les solvants polaires, l'eau, les acides carboxyliques de $C_1$ à $C_6$ de préférence l'acide acétique, les alcools de $C_1$ à $C_3$ avantageusement le méthanol.

Le composé de formule (III) est récupéré par ajout d'un accepteur d'acide en quantité au moins stoechiométrique parmi les accepteurs d'acide on peut citer les agents basiques, organiques ou minéraux, notamment les hydroxydes ou carbonates de sodium ou potassium, ainsi que les amines dont le sel avec l'acide est soluble dans le solvant choisi telles que les tris (alkyl)amines, notamment la triéthylamine, tripropylamine, tribuylamine, et les N,N-diakylaniline.

L'exemple souvant donné à titre non limitatif illustre l'invention et montre comme elle peut être mis en oeuvre.

Exemple I :

I7,36 g (4 x I0$^{2}$ mole) de produit de formule

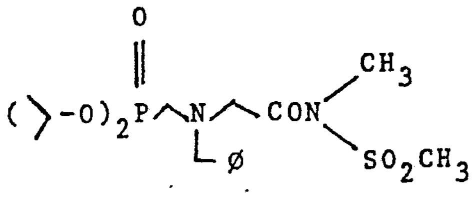

et 9,2 ml d'acide sulfurique 25N (II,48 x I0$^{-2}$ mole) sont chauffés 4 H à 75° C. Le mélange est refroidi à40° C. 40 ml de méthanol et 0,48 g de palladium sur noir à 5 % en poids de palladium sont ajoutés à la solution précédente. Le mélange est alors mis sous atmosphère d'hydrogène. Après l'absorption de la quantité théorique d'hydrogène , le mélange est filtré, lavé avec 70 ml de méthanol. Une solution de II,6 g de triéthylamine (II,48 x I0$^{-2}$mole) dans 40 ml de méthanol est coulée en I h dans le mélange réactionnel maintenu à 20° C. A la fin de la coulée un précipité apparait. Celui-ci est filtré I5 mn plus tard. Le solide après avoir été placé dans une étuve chauffé à 70° sous 25 torrs, a une masse de 7,8I g son titre en produit de formule

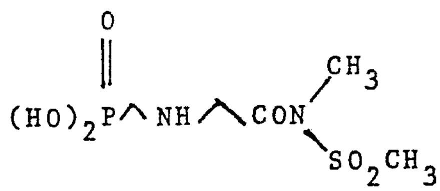

est supérieur à 99 % (dosage CLHP) ce qui correspond à un rendement en produit isolé de 75 %.

Exemple 2 :

I7,36 g (4xI0$^{-2}$mole) de produit de formule

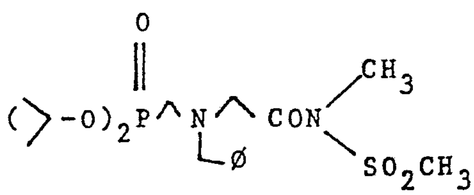

le I7,3 ml d'une solution d'acide sulfurique 20N dans l'acide acétique sont chauffés 4 heures à 60° C. Le mélange est refroidi puis traité comme dans l'exemple I (I7,36 g de triéthylamine sont utilisés pour la précipitation). Le solide obtenu a une masse de 9,05 g ce qui correspond à un rendement en produit isolé de 87 %.

Exemple 3:

I7,36g(4xI0$^{-2}$ mole) de produit de formule

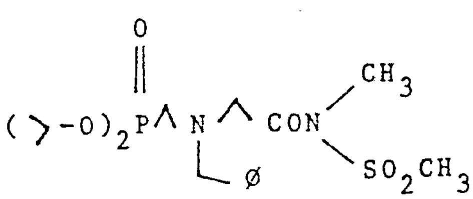

et 34,72 g d'une solution à 37 % d'acide chlorydrique dans l'eau sont chauffés 4 h à 60° C dans un flacon clos. Le mélange est refroidi. 0,7 g Pd/C à 5 % en poids de palladium et 40 ml de méthanol sont ajoutés. Le mélange est agité sous atmosphère d'hydrogène à 40° C. Dès la fin de l'absorption d'hydrogène, le catalyseur est filtré

et le mélange est concentré sous vide à 40° C. Le résidu est dilué avec 200 ml de méthanol et 50 ml d'eau. 4,75 g de triéthylamine dans l0 ml de méthanol sont ajoutés à 20° C.

Après filtration et séchage 7,6 g de produit est isolé ce qui correspond à un rendement de 73 %.

Exemple 4:

On opère comme dans l'exemple I avec 2l,23 g de tributylamine au lieu de triéthylamine. Le rendement en produit isolé est de 8l %.

**Revendications**

l) Composés de formule:

```
    OH          R4
    |           | +
O = H - CH2- N - CH2- CO - N - SO2- R1          (I)
    |           |               |
    OH          H    X-         R
```

dans laquelle :

- $R^1$ représente un radical hydrocarboné, spécialement alkyle, aryle ou cycloalkyle, ces divers radicaux pouvant éventuellement être substitués ; comme sustituants, on peut citer en particulier, les atomes d'halogène et les groupes phényle, cyano, alkyle, alkoxyle, carboxylate d'alkyle, dans lesquels les groupes alkyle ont de préférence de l à 4 atomes de carbon ; $R^1$ a le plus souvent de l à l8 atomes de carbone, de préférence de l à 7 atomes de carbone, et plus spécialement de 3 à 7 atomes de carbone lorsqu'il s'agit d'un groupe cycloalkyle ; de préférence il s'agit d'un radical alkyle ayant de l à 4 atomes de carbone, éventuellement halogéné, notamment chloré ou fluoré, par exemple $CF_3$,
- R représente l'atome d'hydrogéne ou a l'une des signification donnée pour $R^1$, et est de préférencde un groupe alkyle de l à 4 atomes de carbone,
-$R^4$ un groupement hydrogénolysable ; en particulier un radical de formule $Ar(R^5)(R^6)C$- dans laquelle Ar est un groupe aromatique, de préférence phényle, et $R^5$ et $R^6$ sont l'atome d'hydrogène ou un radical Ar ou un groupe alkyle ayant, de préférence au plus 6 atomes de carbone,
- $X^-$ est un anion $HSO_4^-$ , $Cl^-$, $R_7SO_3^-$ ou $R_7$ est un groupe alkyle de $C_1$ à $C_4$, éventuellement mono ou poly halogéné, de préférence le trifluorométhyle.

2) Procédé de préparation des composés selon la revendication l, caractérisé en ce que l'on fait réagir un composé de formule :

```
    OR2            R4
    |              |
O = P - CH2 - N - CH2 - CO - N - SO2 - R1   (II)
    |                          |
    OR3                        R
```

dans laquelle $R_1$, R, $R_4$ ont la même signification que dans la formule (l) et $R_2$ et $R_3$ identiques ou différents sont liés à l'atome d'oxygène par un carbone secondaire, en présence d'un acide choisi parmi l'acide chlorhydrique, l'acide sulfurique, les acides sulfoniques.$R_7SO_3H$ où $R_7$ la même signification que dans la revendication l.

3) Procédé selon la revendication 2, caractérisé en ce que la réaction est effectuée en milieu solvant organique polaire choisi parmi les acides carboxyliques aliphatiques de $C_1$ à $C_6$ seuls ou en mélange, les alcools de $C_1$ à $C_3$.

4) Procédé selon la revendication l, caractérisé en ce que la normalité de l'acide est comprise entre 2N et la pureté et en ce que de préférence on utilise entre 2,5 et 4 équivalents d'ions $H^+$ par mole de composé de formule II.

5) Procédé selon l'une des revendications 2 ou 4, caractérisé en ce que l'acide est l'acide sulfurique.

6) Procédé selon la revendication 2, caractérisé en ce que la température de la réaction est comprise entre 40 et l00° C.

7) Procédé selon la revendication 2, caractérisé en ce que R et $R_1$ identiques ou différents sont des groupes méthyle.

8) Procédé selon l'une des revendications 2 ou 7, caractérisé en ce que $R_2$ et $R_3$ identiques ou différents correspondent à des groupes isopropyle, isobutyle, isopentyle, de préférence isopropyle.

9) Utilisation des composés de formule (I) à titre d'intermédiaires pour la préparation des composés de formule

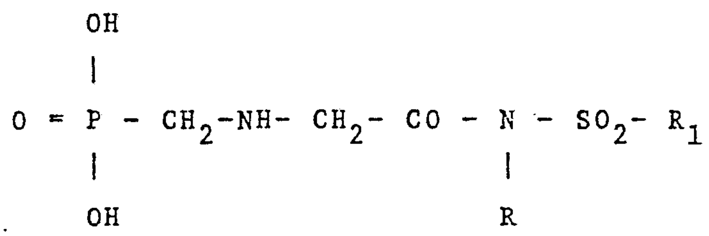
(III)

dans laquelle R et $R_1$ ont la même signification que dans les composés selon la revendication I, par hydrogénolyse en présence d'un catalyseur, dans un solvant susceptible de dissoudre le composé de formule :

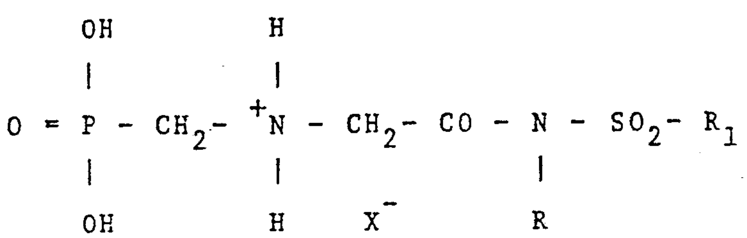
(IV)

dans laquelle $R_1$, R, X ont la même signification que sans le composé selon la revendication I, puis hydrolyse par ajout d'un accepteur d'acide et récupération du composé de formule (III)

I0)Utilisation selon la revendication 9, caractérisé en ce que l'accepteur d'acide est choisi parmi les amines de préférence tertiaires.

Office européen des brevets

# RAPPORT DE RECHERCHE EUROPEENNE

Numero de la demande

EP 88 42 0056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 189 358 (RHONE-POULENC AGROCHIMIE)<br>* Revendications *<br>----- | 1 | C 07 F 9/38 |
| | | | **DOMAINES TECHNIQUES RECHERCHES (Int. Cl.4)** |
| | | | C 07 F 9/00 |

Le présent rapport a été établi pour toutes les revendications

| Lieu de la recherche | Date d'achèvement de la recherche | Examinateur |
|---|---|---|
| LA HAYE | 06-06-1988 | BESLIER L.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)